# DEMANDE DE BREVET EUROPEEN

(11) **EP 4 215 409 A1**
(43) Date de publication de la demande: **26.07.2023**
(21) Numéro de dépôt: 23152773.0
(22) Date de dépôt: 20.01.2023
(51) Int. Cl.: B60L 53/31

(54) **STATION DE RECHARGE POUR VÉHICULES ÉLECTRIQUES TRANSPORTABLE**

(30) Priorité: 20.01.2022 FR 2200485
(71) Demandeur: Aventech, 26000 Valence (FR); O2M Energy, 84210 Saint-Didier (FR)
(72) Inventeur: REYES, Christophe, 07230 Rompon (FR); CARRET, Michel, 84210 Saint-Didier (FR)
(74) Mandataire: Germain Maureau

(57) **Abrégé**

L'invention concerne une station de recharge (S1) de véhicules électriques, comprenant : une structure porteuse (C1), une borne de raccordement électrique pour raccorder la station de recharge à un réseau électrique fixée à la structure porteuse, au moins deux bornes de recharge (B1-B2) fixées sur la structure porteuse et électriquement reliées à la borne de raccordement électrique, la station se présentant sous la forme d'un ensemble transportable pour être installée en un emplacement de recharge.

## Description

### Domaine technique

La présente invention concerne une station de recharge pour véhicules électriques.

### Etat de la technique

Avec le développement de l'usage des véhicules électriques, il apparait nécessaire de développer une infrastructure de recharge à grande échelle, notamment à l'échelle des territoires.

A l'heure actuelle, de nombreuses bornes de recharge électriques sont installées dans les villes, les zones commerciales et les stations-service. Généralement, l'installation d'une borne ou d'un ensemble de bornes requiert des travaux de génie civil comme la réalisation de fondations pour supporter les bornes et de tranchées pour le passage de câbles de raccordement au réseau électrique. L'installation doit ensuite être testée. Ces étapes nécessitent plusieurs mois de délai et présentent un coût relativement élevé.

Il est donc souhaitable de développer une solution permettant de réduire les coûts et les délais d'installation d'une station de recharge de véhicules électriques.

### Résumé de l'invention

Des modes de réalisation concernent une station de recharge pour véhicules électriques, comprenant : une structure porteuse, une borne de raccordement électrique pour raccorder la station de recharge à un réseau électrique, fixée à la structure porteuse, au moins deux bornes de recharge fixées sur la structure porteuse et électriquement reliées à la borne de raccordement électrique, la station se présentant sous la forme d'un ensemble transportable pour être installée en un emplacement de recharge.

Grâce à ces dispositions, la station de recharge peut être fabriquée en usine et testée, puis transportée sur camion sur le site d'installation de la station de recharge. La station de recharge peut être prévue pour être posée et ancrée sur un site déjà existant, tel qu'un parking, déjà équipé d'une connexion à un réseau électrique basse ou haute tension. Alternativement, des travaux de construction de fondations pour la station de recharge, d'extension du réseau électrique jusqu'au site d'installation, de construction d'une borne de mise à la terre et de test de la qualité du raccordement électrique à la terre peuvent être réalisés pendant la fabrication en usine de la station. Les opérations d'installation, de connexion au réseau électrique et de mise en service de la station de recharge peuvent ainsi être réalisées en quelques jours.

Par « ensemble transportable », il est notamment entendu que ledit ensemble transportable peut être transporté d'un bloc ou de manière unitaire, i.e. sans avoir à être démonté. Dans le cas présent, il est notamment entendu que la station de recharge est transportable d'un bloc, ou forme un tout unitaire qui peut être transporté, sans préjudice à son intégrité structurelle. Cela présente l'avantage que l'installation de la station de recharge peut être réalisée rapidement sans avoir à transporter la station de recharge en pièces détachées nécessitant ensuite un assemblage desdites pièces détachées sur l'emplacement de recharge où la station de recharge doit être installée. La station de recharge peut être vue sans sa globalité comme un ensemble autoporteur.

Selon un mode de réalisation, la structure porteuse est configurée pour supporter le poids de la station de recharge lorsque la station de recharge est déplacée (i.e. transportée), par exemple par soulèvement notamment via la structure porteuse.

Cela permet de faciliter le transport de la station de recharge entière.

Autrement dit, la structure porteuse est alors notamment autoporteuse, i.e. qu'elle supporte son propre poids et celui du reste de la station de recharge formant l'ensemble transportable sans se déformer lorsque la station de recharge est transportée.

Selon un mode de réalisation, la station de recharge comprend un local dans lequel est installé un circuit électrique basse tension relié aux bornes de recharge.

Cela permet notamment d'avoir directement au sein de la station de recharge une alimentation électrique adaptée aux bornes de recharge en matière de tension.

Selon un mode de réalisation, le local forme la structure porteuse ou est installé sur la structure porteuse.

Cela permet notamment de former l'ensemble transportable de manière adaptée.

Selon un mode de réalisation, le local loge un transformateur haute tension / basse tension comportant un circuit primaire connecté à un circuit haute tension relié à la borne de raccordement électrique et un circuit secondaire connecté au circuit basse tension.

Cela permet notamment d'adapter la tension aux contraintes locales en matière de source d'énergie disponible comme une source haute tension

Selon un mode de réalisation, le local comprend une première pièce logeant le transformateur haute tension / basse tension et le circuit haute tension, et une seconde pièce logeant au moins en partie le circuit basse tension et des équipements connectés au circuit basse tension.

Cela permet notamment d'autoriser des accès sécurisés différents à des équipes différentes ayant des accréditations/habilitations soit haute tension soit basse tension. La présence des première et deuxième pièces permet aussi par exemple de faciliter la gestion thermique au sein de ces première et deuxième pièces en vue d'adapter si besoin leur climatisation.

Selon un mode de réalisation, le local comprend plusieurs modules comportant : au moins un premier module couplé à au moins une borne de recharge et logeant le circuit basse tension, et un second module logeant un transformateur haute tension / basse tension comportant un circuit primaire connecté à un circuit haute tension relié à la borne de raccordement électrique et un circuit secondaire connecté au circuit basse tension.

Cela permet notamment de s'adapter aux caractéristiques des réseaux publics de distribution électrique.

Selon un mode de réalisation, la structure porteuse est configurée pour être au moins partiellement enterrée dans le sol à l'emplacement de recharge.

Cela permet notamment d'installer la station de recharge fonctionnelle avec une minimisation de l'impact au sol, permettant de réduire les travaux de génie civil au niveau de l'emplacement de recharge.

Selon un mode de réalisation, la structure porteuse est configurée pour loger des câbles de raccordement électrique des bornes de recharge.

Cela permet notamment de faciliter le raccordement des bornes de recharge à la borne de raccordement électrique au sein de la station de recharge. Ainsi, avant l'installation de la station de recharge sur l'emplacement de recharge, la station de recharge peut être entièrement pré-câblée et testée afin d'homogénéiser le niveau de qualité lors de la fabrication de stations de recharge et de réduire fortement les corrections d'anomalies éventuelles et défauts d'intégration directement après l'installation sur l'emplacement de recharge.

Selon un mode de réalisation, la structure porteuse comprend un élément monobloc en un matériau composite tel que par exemple du béton armé.

Le matériau composite a pour avantage de permettre une résistance mécanique adaptée pour supporter les bornes de recharge et notamment pour permettre la transportabilité de la station de recharge.

Selon un mode de réalisation, au moins l'une des bornes de recharge est configurée pour fonctionner à une puissance supérieure ou égale à 22 kW et de préférence à une puissance comprise entre 22 kW et 2000 kW, et plus particulièrement comprise entre 75 kW et 500 kW.

Cela permet de tendre à diminuer le temps de recharge des véhicules électriques compatibles avec une telle borne de recharge.

Selon un mode de réalisation, au moins l'une des bornes de recharge est configurée pour fonctionner une tension supérieure ou égale à 400 V et de préférence à une tension comprise entre 400 V et 1200 V.

Cela permet d'adapter la tension de recharge à celle requise par les véhicules électriques au cours de leur recharge afin d'optimiser le temps de recharge des véhicules électriques et tendre, le cas échéant, vers une optimisation de la recharge simultanée de plusieurs véhicules électriques via les bornes de recharge.

Selon un mode de réalisation, la structure porteuse comprend une ossature, l'ossature comprenant : un premier longeron, un deuxième longeron, des traverses fixées chacune, d'une part, au premier longeron et, d'autre part, au deuxième longeron.

Cela permet de former une structure porteuse robuste à résistance mécanique adaptée pour supporter les bornes de recharge et notamment pour permettre la transportabilité de la station de recharge.

Selon un mode de réalisation, la structure porteuse comprend des pieds réglables pour ajuster l'inclinaison de la station de recharge, en particulier par rapport à un sol sur lequel la station de recharge est destinée à être installée.

Cela permet à la station de recharge de pouvoir s'adapter à la topographie d'un terrain d'accueil, i.e. de l'emplacement de recharge, notamment à ses courbes de niveau.

Selon un mode de réalisation, la structure porteuse comprend une première face latérale, une deuxième face latérale opposée à la première face latérale, au moins un premier organe de levage agencé au niveau de la première face latérale et au moins un deuxième organe de levage agencé au niveau de la deuxième face latérale.

Cela permet de prévoir des moyens, i.e. des premier(s) et deuxième(s) organes de levage pour soulever la station de recharge via la structure porteuse.

Selon un mode de réalisation, le premier organe de levage comprend une première ouverture de levage, le deuxième organe de levage comprend une deuxième ouverture de levage, la distance séparant la première face latérale de la première ouverture de levage étant strictement supérieure à la distance séparant la deuxième face latérale de la deuxième ouverture de levage.

Cela permet de tenir compte d'un centre de gravité qui ne serait pas situé à équidistance entre les première et deuxième faces latérales et ainsi permettre un levage de la station de recharge tout en évitant le basculement de la station de recharge, basculement qui pourrait entraîner sa chute et sa détérioration.

Selon un mode de réalisation le premier organe de levage est amovible.

Ainsi, le premier organe de levage peut être attaché de manière réversible à la première face latérale afin de permettre son retrait lorsque la station de recharge est sur son emplacement de recharge, diminuant ainsi l'emprise au sol de la station de recharge.

Des modes de réalisation peuvent également concerner un procédé d'installation d'une station de recharge de véhicules électriques, le procédé comprenant des étapes consistant à : fabriquer et tester en usine une station de recharge telle que définie précédemment, préparer un emplacement de recharge pour recevoir la station de recharge, transporter la station de recharge jusqu'à l'emplacement de recharge, ancrer la station de recharge à l'emplacement de recharge, et relier la borne de raccordement électrique de la station de recharge au réseau électrique.

Cela permet notamment de faciliter et de rendre plus rapide l'installation de la station de recharge sur l'emplacement de recharge

Selon un mode de réalisation, le procédé comprend des étapes de raccordement électrique de la station de recharge à la terre, et de test de la qualité du raccordement électrique à la terre.

Cela permet notamment de garantir la sécurité des biens et des personnes lors de l'utilisation de la station de recharge ultérieurement aux étapes de raccordement et de test.

Selon un mode de réalisation, le procédé comprend une étape consistant à au moins partiellement enterrer la station de recharge dans le sol à l'emplacement de recharge.

Cela permet notamment de réduire l'impact au sol tout en garantissant une implantation au sol idoine, par exemple en formant ainsi un ancrage de type auto-maintien inhérent au poids global de la station de recharge et à son insertion partielle dans le sol.

De préférence, l'étape consistant à transporter la station de recharge jusqu'à l'emplacement de recharge est telle que la station de recharge est transportée assemblée.

Ainsi, la station de recharge peut être installée plus rapidement sur l'emplacement de recharge.

### Brève description des figures

La présente invention sera bien comprise à l'aide de la description qui suit en référence aux figures annexées, dans lesquelles des signes de références identiques correspondent à des éléments structurellement et/ou fonctionnellement identiques ou similaires.
La figure 1 est une vue schématique de face d'une station de recharge de véhicules électriques, selon un mode de réalisation,
La figure 2 est une vue schématique de profil de la station de recharge, selon un mode de réalisation,
La figure 3 est une vue schématique de dessus de la station de recharge, selon un mode de réalisation,
La figure 4 est une vue schématique de dessus montrant l'intérieur de la station de recharge, selon un mode de réalisation,
La figure 5 est une vue schématique en coupe de profil montrant l'intérieur de la station de recharge, selon un autre mode de réalisation,
La figure 6 est une vue schématique de face d'une station de recharge de véhicules électriques, selon un autre mode de réalisation,
La figure 7 est une vue schématique de dessus de la station de recharge de la figure 6, selon un autre mode de réalisation,
La figure 8 est une vue schématique en perspective d'une station de recharge de véhicules électriques, selon un autre mode de réalisation,
La figure 9 est une vue schématique de profil de la station de recharge de la figure 8, selon un mode de réalisation,
La figure 10 représente schématiquement en coupe suivant des plans horizontaux, en vue de dessus, la station de recharge de la figure 8, selon un autre mode de réalisation,
La figure 11 est une vue schématique en perspective d'une station de recharge de véhicules électriques, selon un autre mode de réalisation,
La figure 12 est une vue schématique de la station de recharge de la figure 11 pour laquelle un plancher a été retiré afin de visualiser ce qui se trouve sous ce plancher,
La figure 13 est une vue partielle de la station de recharge représentée en figure 12 et centrée sur la zone Z1,
La figure 14 est une vue schématique en perspective d'une station de recharge de véhicules électriques, selon un autre mode de réalisation,
La figure 15 est une vue schématique de dessous de la station de recharge représentée en figure 14,
La figure 16 est une vue de profil schématique et partielle d'une structure porteuse, du type de celle représentée en figure 12, selon une coupe suivant un plan vertical, la figure 16 illustrant notamment un pied réglable pour participer à l'ajustement de l'inclinaison de la station de recharge,
La figure 17 est une vue schématique de la station de la figure 11 selon une vue de profil orientée dans la direction de la longueur de la station de recharge de sorte à montrer différentes possibilités d'ajustement de l'inclinaison d'une ossature de la station de recharge,
La figure 18 est une vue schématique partielle de la structure porteuse permettant de montrer des organes de levage destinés à participer au levage de la station de recharge,
La figure 19 est une vue schématique de la structure porteuse selon une coupe suivant un plan vertical et orthogonal à la direction d'allongement de la station de recharge, permettant de montrer des organes de levage.

### Description détaillée

Par « sensiblement orthogonal(e) », il est entendu orthogonal(e) ou orthogonal(e) à plus ou moins 5 degrés.

Par « sensiblement parallèle », il est entendu parallèle ou parallèle à plus ou moins 5 degrés.

La notion de « supérieur et d'inférieur » vis-à-vis d'un positionnement est notamment donné selon l'orientation d'une station de recharge correspondante sur son emplacement de recharge.

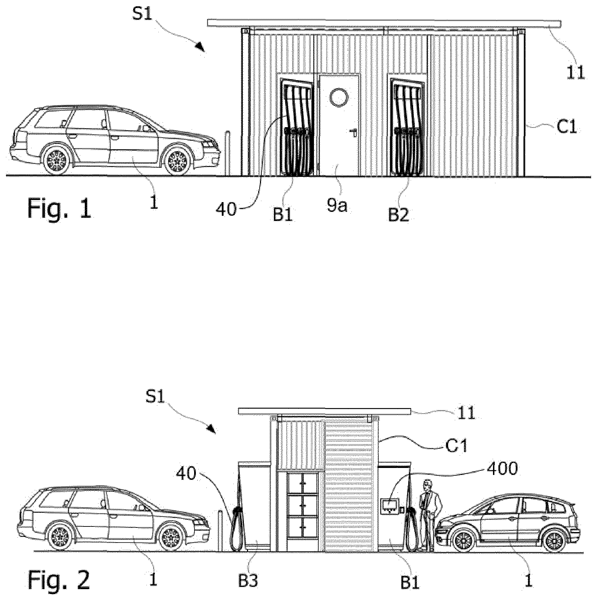

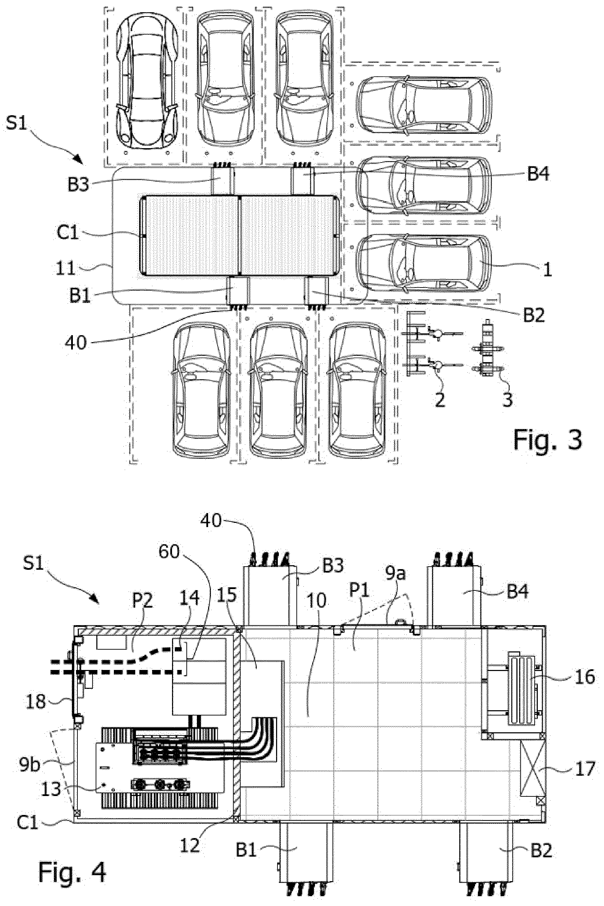

Les figures 1, 2 et 3 représentent une station de recharge S1 de véhicules électriques, selon un mode de réalisation. La station de recharge S1 comprend un local C1 transportable, sur lequel sont fixées plusieurs bornes de recharge B1, B2, B3, B4, et une borne de raccordement 60 à un réseau électrique. Le local C1 présente une forme générale parallélépipédique présentant une face avant et une face arrière avec une porte d'accès 9a pour le personnel de maintenance. Les bornes B1, B2 peuvent être installées contre la face avant, et les bornes B3, B4 peuvent être installées contre la face arrière. Le local C1 peut être surmonté d'un auvent 11. Chacune des bornes B1-B4 peut recharger plusieurs véhicules, simultanément, par exemple quatre véhicules. Sur la figure 3, la station de recharge C1 peut accueillir simultanément neuf véhicules 1 de type automobile, des scooters 3 et des vélos 2. Les bornes de recharge B1-B4 sont reliées électriquement à un circuit basse tension logé dans le local C1.

Selon un mode de réalisation, le local C1 présente la structure d'un conteneur standard de transport de marchandises, l'auvent 11 étant fixé sur la paroi supérieure du local. Par exemple, le local peut présenter une largeur comprise entre 1,8 et 2,5 m de large, et une hauteur comprise entre 2,5 et 3,5 m de hauteur.

La figure 4 montre l'intérieur du local C1. Le local C1 comprend un tableau général basse tension 15 relié à la borne de connexion au réseau électrique (autrement dit à la borne de raccordement 60 au réseau électrique). Le tableau général 15 permet d'alimenter en courant basse tension (100 à 300 V), les bornes de recharge B1-B4 et différents équipements électriques pouvant être installés dans le local C1, tels qu'un dispositif de climatisation 16 et/ou un dispositif de ventilation 17. Le tableau général 15 comprend classiquement un disjoncteur général, un compteur de consommation et un tableau de fusibles ou disjoncteurs reliés respectivement aux bornes B1-B4 et aux équipements électriques installés dans le local. Les câbles électriques reliant le tableau général 15 aux bornes B1-B4 et aux équipements électriques 16, 17 peuvent être logés dans un faux plancher 10 ou un faux plafond.

Par exemple, par faux plancher 10 ou faux plafond, il est entendu que ce faux plancher 10 ou faux plafond est amovible permettant ainsi, si besoin, l'accès aux câbles électriques.

Selon un mode de réalisation, le tableau général 15 est relié à un réseau électrique basse tension et à une installation de mise à la terre. Dans ce cas, la borne de raccordement 60 au réseau électrique est située sur le tableau général 15 (non représenté). Selon un exemple de réalisation, la borne de raccordement 60 électrique est prévue pour être reliée à un réseau électrique basse tension, comprise entre 200 et 240 V en monophasé ou entre 380 et 440 V en triphasé.

Selon un mode de réalisation illustré par la figure 4, la borne de raccordement 60 électrique est prévue pour être reliée à un réseau électrique haute tension, comprise entre 13 et 33 kV. La station S1 comprend un transformateur haute tension / basse tension 13 et un circuit haute tension incluant des équipements de protection électrique 14 tels que des fusibles et des disjoncteurs. Le tableau général 15 est alors connecté au transformateur 13. Dans ce cas, la borne de raccordement 60 qui est alors prévue pour se connecter à un réseau électrique haute tension, est située sur l'un des équipements de protection 14.

Selon un mode de réalisation, le local C1 comprend une cloison 12 divisant le local en deux pièces P1, P2, accessibles depuis l'extérieur par des portes 9a, 9b, 18 distinctes, l'une P1 des deux pièces logeant le circuit basse tension connecté aux bornes B1-B4, et l'autre P2 des deux pièces logeant le circuit haute tension incluant le transformateur 13 et les équipements de protection électrique 14. Ainsi, les équipes de maintenance habilitées à intervenir seulement sur des équipements basse tension ne peuvent pas intervenir sur les équipements haute tension 13, 14.

Par exemple, sur la figure 4, la porte 9a permet l'accès à la pièce P1 pour le personnel de maintenance habilité, la porte 9b permet la manutention du transformateur 13 vis-à-vis de la pièce P2 (i.e. son insertion dans, ou son retrait de, la pièce P2), et la porte 18 permet l'accès à la pièce P2 pour le personnel de maintenance habilité.

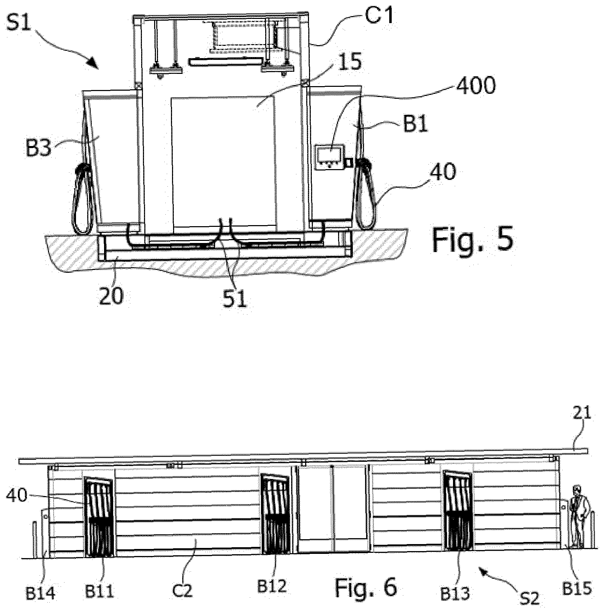

Selon un mode de réalisation illustré par la figure 5, le local C1 est installé sur une structure porteuse 20 avec les bornes de recharge B1-B4. La structure porteuse peut être totalement ou partiellement enterrée ou simplement posée et fixée sur le sol. La structure porteuse peut être utilisée pour le passage des câbles électriques de la station S1 et notamment les câbles 51 reliant les bornes B1-B4 au tableau général 15.

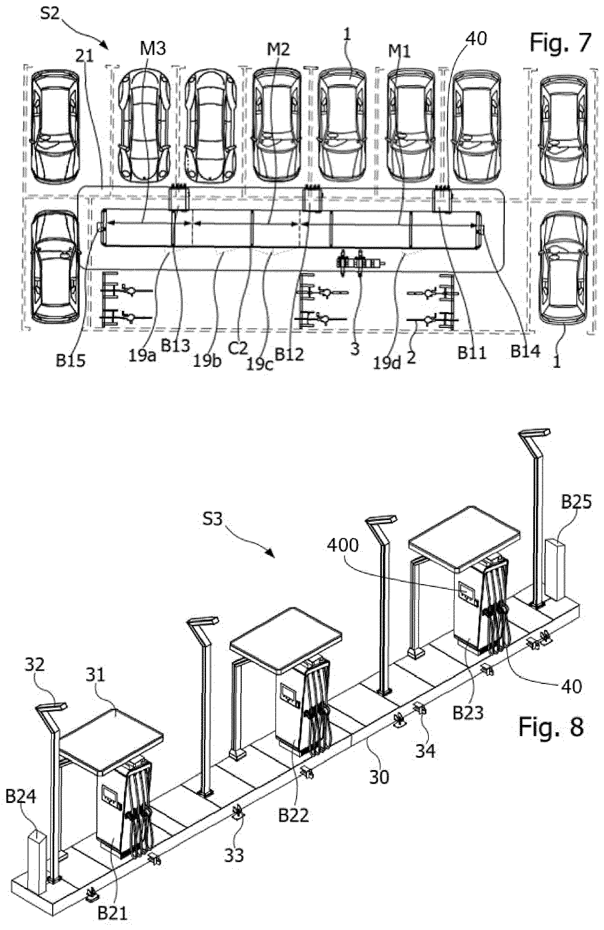

Les figures 6 et 7 représentent une station de recharge S2 de véhicules électriques 1, 2, 3, selon un autre mode de réalisation. La station de recharge S2 comprend un local C2 composé de plusieurs modules M1, M2, M3 transportables séparément et pouvant être assemblés et fixés entre eux sur site, et une borne de raccordement à un réseau électrique (non représentée). Plusieurs bornes de recharge B11, B12, B13, B14, B15 sont fixées sur les modules M1 et M3. Le module M2 peut accueillir un transformateur haute tension / basse tension et les équipements de protection électrique haute tension associés. Le module M1 comprend les bornes de recharge B11, B12 et B14, et le module M3 comprend les bornes B13 et B15.

Le local C2 présente une forme générale parallélépipédique présentant une face avant sur laquelle sont fixées les bornes B11-B13, des faces latérales sur lesquelles sont fixées les bornes B14, B15 et une face arrière avec des portes d'accès 19a, 19b, 19c, 19d pour le personnel de maintenance et des prises de recharge de vélos 2 et scooters 3. Le local C2 peut être surmonté d'un auvent 21. Chacune des bornes B11-B13 peut recharger plusieurs véhicules, simultanément, par exemple quatre automobiles 1, tandis que les bornes B14 et B15 peuvent recharger un seul véhicule. Sur la figure 7, la station de recharge S2 peut accueillir et charger simultanément neuf automobiles 1, plusieurs vélos 2 et scooters 3.

Selon un mode de réalisation, les modules M1, M2, M3 présentent la structure d'un conteneur standard de transport de marchandises.

Il est à noter que la station de recharge S2 peut ne pas comporter de module haute tension M2 si un réseau électrique basse tension est accessible à partir du site prévu d'implantation de la station de recharge.

Le cas échéant, la borne de raccordement au réseau électrique peut être agencée dans le module M2.

Le local C2 est, de préférence, transportable.

Bien que le local C2 puisse être transporté d'un seul tenant, les modules M1, M2, M3 transportables séparément permettent de laisser la possibilité de démonter le local C2 si d'aventure un problème lié à l'encombrement, et notamment à la longueur, de la station S2 de recharge (et donc du local C2) devait se produire lors du transport de la station S2 de recharge.

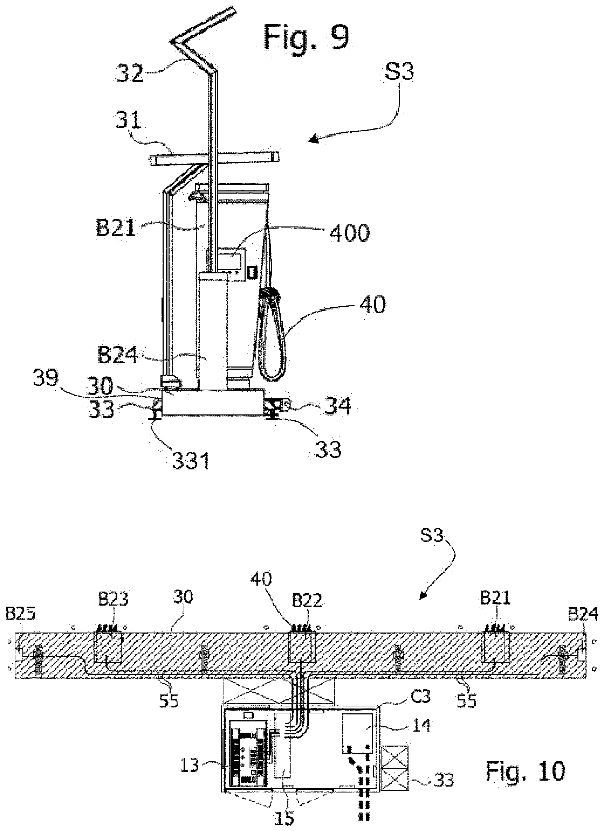

Les figures 8, 9 et 10 représentent une station de recharge S3 de véhicules électriques, selon un autre mode de réalisation. La station de recharge S3 comprend une structure porteuse 30 à laquelle sont fixées des bornes de recharge B21, B22, B23, B24, B25 et une borne de raccordement à un réseau électrique. Des auvents 31 fixés sur la structure porteuse 30 peuvent être prévus pour abriter les bornes de recharge B21-B23. La structure porteuse 30 peut également supporter d'autres équipements comme des lampadaires 32. Sur la figure 10, les câbles d'alimentation électrique 55 des bornes B21-B25 et des lampadaires sont logés dans la structure porteuse 30. La structure porteuse 30 peut être ancrée sur le sol ou bien partiellement ou totalement enterrée dans le sol. En l'absence de local, le tableau général basse tension 15 peut être logé dans la structure porteuse 30 ou dans une armoire fixée sur la structure porteuse.

Ainsi, en l'absence de local et lorsque l'armoire fixée sur la structure porteuse loge le tableau général basse tension 15, le tableau général basse tension 15 sert de borne de raccordement au réseau électrique fixée à la structure porteuse via l'armoire.

Selon un mode de réalisation illustré par la figure 10, la station de recharge S3 comprend un local C3 prévu pour accueillir le transformateur haute tension / basse tension 13, les équipements de protection électrique haute tension associés 14. Dans ce cas, le local C3 peut également loger le tableau général basse tension 15 et une partie du circuit basse tension auquel sont connectées les bornes B21-B25, ainsi que les lampadaires 32. Le local C3 ou la structure porteuse 30 peut également supporter des casiers dans lequel des batteries de vélos peuvent être chargées et des bornes de recharge de scooters.

Selon un autre mode de réalisation, la station S3 est raccordée à un réseau électrique basse tension, et comprend un local prévu pour loger uniquement un circuit basse tension incluant le tableau général basse tension 15 et auquel sont connectées les bornes B21-B25 et les lampadaires 32.

La notion d'ensemble transportable définie ci-avant dans la partie « résumé de l'invention » s'applique aussi au terme « transportable » dans la présente description détaillée. Une chose transportable est alors notamment transportable d'un seul tenant (d'un bloc).

De manière générale, et comme cela est notamment illustré aux figures 1 à 12, 14, 15 et 17, la station de recharge S1, S2, S3, S4 de véhicules électriques, comprend : la structure porteuse C1, C2, 20, 30, 70 (le cas échéant, le local C1, C2 forme la structure porteuse) ; la borne de raccordement électrique 60 pour raccorder la station de recharge S1, S2, S3, S4 à un réseau électrique, fixée à la structure porteuse C1, C2, 20, 30, 70 ; au moins deux bornes de recharge B1-B4, B11-B15, B21-B25, B41-B43 fixées sur la structure porteuse C1, C2, 20, 30, 70 et électriquement reliées à la borne de raccordement électrique, la station se présentant sous la forme d'un ensemble transportable (dont la définition est donnée en partie « résumé de l'invention ») pour être installée en un emplacement de recharge par exemple tel qu'évoqué ci-avant.

La borne de raccordement électrique 60 fixée à la structure porteuse C1, 30, 70 est notamment visible en figures 4, 11, 12, 14 et 15. Bien que non représentée en figures 6, 7, 8 et 9, cette borne de raccordement électrique fixée à la structure porteuse C2, 30 correspondante peut tout à fait être présente ou, le cas échéant être installée.

Le fait que la station de recharge S1, S2, S3, S4 se présente sous la forme de l'ensemble transportable permet, après fabrication et test de la station de recharge S1, S2, S3, S4, qu'elle soit transportée et installée directement sur l'emplacement de recharge sans avoir besoin de la démonter et d'assurer son transport en pièces détachées ; il en résulte un gain de temps lors de l'installation de la station de recharge S1, S2, S3, S4.

Selon un mode de réalisation, la structure porteuse C1, C2, 20, 30, 70 est configurée pour supporter le poids de la station de recharge S1, S2, S3, S4 lorsque la station de recharge S1, S2, S3, S4 est déplacée (c'est-à-dire transportée), notamment via la structure porteuse C1, C2, 20, 30, 70, par exemple au moins par soulèvement. A cet effet, la structure porteuse C1, C2, 20, 30, 70 est autoporteuse, i.e. qu'elle supporte son propre poids et aussi celui du reste de la station de recharge S1, S2, S3, S4 formant l'ensemble transportable sans se déformer lorsque la station de recharge S1, S2, S3, S4 est transportée/déplacée par exemple à l'aide de câbles, ou de sangles, de soulèvement reliés, d'une part, à la structure porteuse C1, C2, 20, 30, 70 et, d'autre part, à un dispositif de levage et de manutention tel qu'une grue ou un ou plusieurs portiques de levage.

Le dispositif de levage présent sur site de fabrication de la station de recharge S1, S2, S3, S4 peut permettre de charger (i.e. transporter) par levage la station de recharge S1, S2, S3, S4 sur une remorque d'un camion, tandis qu'un autre dispositif de levage agencé au niveau de l'emplacement de recharge peut permettre de décharger la station de recharge S1, S2, S3, S4 par levage depuis la remorque avant de la poser sur l'emplacement de recharge.

Il résulte de ce qui a été décrit ci-avant que, pendant son transport, l'intégrité de l'ensemble transportable est conservée, ceci étant rendu possible grâce à la structure porteuse C1, C2, 20, 30, 70.

Le transport de la station de recharge S1, S2, S3, S4 peut alors, pris dans sa globalité depuis son site de fabrication à l'emplacement de recharge, comprendre un premier soulèvement de la station de recharge S1, S2, S3, S4 pour la poser sur la remorque, puis un déplacement routier de la remorque jusqu'à l'amener à proximité de l'emplacement de recharge, puis un deuxième soulèvement de la station de recharge S1, S2, S3, S4 pour la transférer de la remorque sur l'emplacement de recharge.

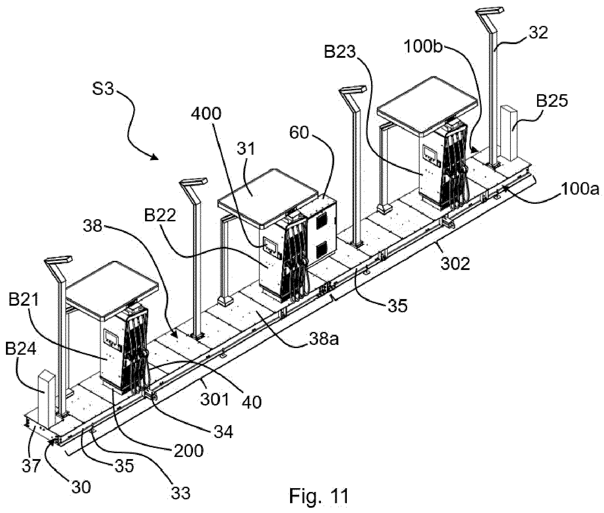

La structure porteuse 30, 70 peut comprendre des première et deuxième faces latérales 100a, 100b opposées, notamment longitudinales, telles que par exemple visibles en figures 11 à 19.

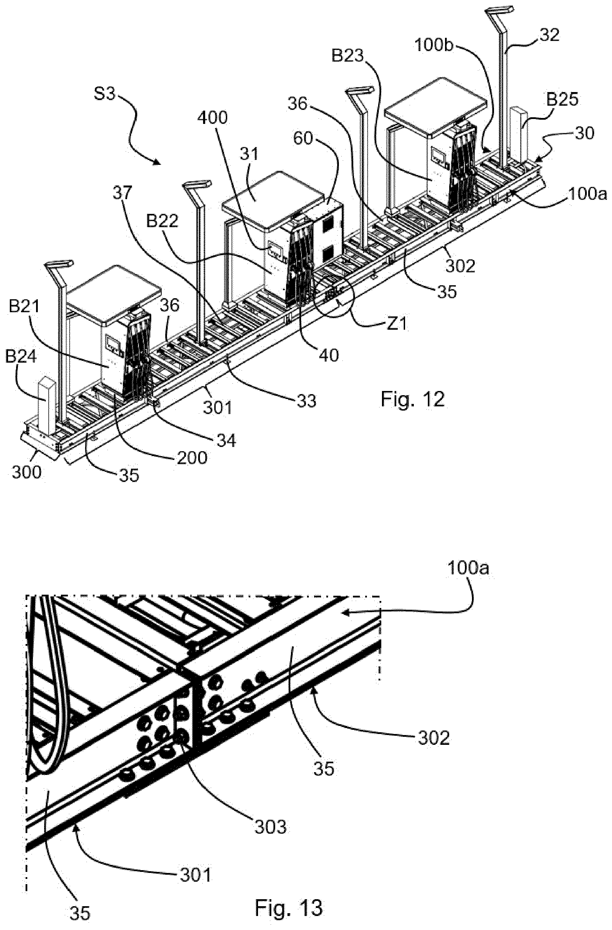

Selon un mode de réalisation, illustré à titre d'exemple en figures 11 et 12, la structure porteuse 30 comprend une ossature 300, l'ossature 300 comprenant un premier longeron 35, un deuxième longeron 36, des traverses 37 fixées chacune, d'une part, au premier longeron 35 et, d'autre part, au deuxième longeron 36. Cela permet de former la structure porteuse 30 de manière robuste pouvant être soulevée tout en permettant de conserver l'intégrité de la station S3 de recharge.

Par exemple, les traverses 37 sont chacune sensiblement orthogonales aux premier et deuxième longerons 35, 36 auxquels elles sont fixées, notamment via leurs extrémités longitudinales opposées respectives.

En particulier, la station de recharge S3 de la figure 11 est du type de celle de la figure 8 pour laquelle la borne de raccordement électrique 60 a directement été fixée sur la structure porteuse 30 au-dessus de cette structure porteuse 30 et pour laquelle la structure porteuse 30 comprend l'ossature 300.

Les traverses 37 permettent de maintenir les premier et deuxième longerons 35, 36 à distance l'un de l'autre, et notamment de manière sensiblement parallèle l'un à l'autre.

Les premier et deuxième longerons 35, 36 et les traverses 37 peuvent être en un métal. Par exemple, ce métal est un acier notamment traité par galvanisation à chaud pour protéger l'acier de la corrosion ; ce qui permet, d'obtenir en dimensionnant de manière idoine l'ossature, une résistance, ou rigidité, permettant le transport de la station de recharge S3 notamment via ladite structure S3 porteuse.

Les premier et deuxième longerons 35, 36 et les traverses 37 peuvent chacun être un UPN (i.e. une poutrelle en forme de U). Les premier et deuxième longerons 35, 36 comprennent alors chacun une âme et des ailes participant à délimiter la première face latérale 100a pour le premier longeron 35 et la deuxième face latérale 100b pour le deuxième longeron 36.

Les premier et deuxième longerons 35, 36 et les traverses 37 peuvent former une structure mécanosoudée et/ou être fixés entre eux à l'aide de boulons. Autrement dit, les traverses 37 peuvent être soudées chacune, d'une part, au premier longeron 35 et, d'autre part, au deuxième longeron 36 et/ou les traverses 37 peuvent être boulonnées chacune, d'une part, au premier longeron 35 et, d'autre part, au deuxième longeron 36. Cela permet de former au moins en partie l'ossature 300 s'étendant en longueur selon la direction d'extension des premier et deuxième longerons 35, 36. Au-dessus de cette ossature 300, les bornes de recharge B21-B25 peuvent être agencées et échelonnées selon la longueur de l'ossature300.

Les bornes de recharge B21-B25 de la station S3, par exemple au nombre de cinq sur l'exemple illustré en figures 11 et 12, peuvent être fixées sur l'ossature qui supporte alors lesdites bornes de recharge B21-B25. Les bornes de recharge B21-B23 peuvent chacune recharger plusieurs véhicules électriques et les bornes de recharge B24-B25 peuvent chacune recharger un véhicule électrique.

Comme le montre à titre d'exemple la figure 11, la station de recharge S3, et notamment sa structure porteuse 30, peut comprendre un plancher 38, par exemple formé de plaques 38a, fixé sur l'ossature 300 et reliant notamment les premier et deuxième longerons 35, 36. Ce plancher 38 est suffisamment rigide de sorte à supporter le passage des usagers de la station S3 de recharge, i.e. une personne utilisatrice de la station de recharge S3 peut marcher sur ce plancher 38 en vue d'interagir avec l'une des bornes de recharge B21-B25. Le plancher 38 forme alors une face supérieure de la structure porteuse 30 au niveau duquel s'étendent au moins en partie les bornes de recharge B21-B25.

Sur la figure 12, le plancher 38 a été retiré pour montrer un exemple de réalisation de l'ossature 300 de la structure porteuse 30.

Un avantage de l'ossature 300 décrite est qu'elle permet de former, notamment en coopération avec le plancher 38, une galerie technique, permettant par exemple au moins en partie le cheminement de câbles électriques (non représentés) reliant chacun l'une des bornes de recharge B21-B25 à la borne de raccordement électrique 60, entre les premier et deuxième longerons 35, 36 et sous le plancher 38. Autrement dit, la station de recharge S3 peut comprendre une cavité dans laquelle cheminent au moins en partie les câbles électriques, cette cavité étant délimitée au moins en partie par le plancher 38 et les premier et deuxième longerons 35, 36. Le plancher 38 peut donc servir de protection des câbles électriques et peut éviter l'accès à ces câbles électriques aux usagers de la station de recharge S3.

Selon une réalisation illustrée à titre d'exemple en figures 11, 12 et 13, l'ossature 300 comprend deux parties 301, 302 (aussi appelées modules) dissociables montées l'une à l'autre par des moyens mécaniques réversibles (i.e. qui peuvent être assemblés et désassemblés par exemple à l'aide d'outils adaptés), par exemple des boulons 303 comme le montre la figure 13 qui correspond à un agrandissement centré sur la zone Z1 de la figure 12. Chacune de ces deux parties 301, 302 comprend deux longerons 35, 36 (i.e. un premier longeron 35 et un premier longeron 36) reliés par des traverses 37 fixées à ces deux longerons 35, 36, notamment de la manière évoquée ci-avant. Le montage des deux parties 301, 302 est réalisé de sorte que les longerons des deux parties 301, 302 soient assemblés deux à deux (par exemple une paire de premiers longerons 35 et une paire de deuxièmes longerons 36 comme le montre la figure 12) pour se prolonger, notamment de sorte à former les première et deuxième faces 100a, 100b latérales. Ceci permet un démontage mécanique de la structure porteuse 30 en cas de problème lors du transport lié à la longueur de la station de recharge S3, par exemple pour passer des obstacles.

Chaque borne de recharge B21-B24 est notamment fixée sur au moins une traverse 37.

A titre non limitatif, sur les figures 11 et 12, la station de recharge S3 peut comprendre des auvents 31 fixés sur la structure porteuse 30 et agencés pour abriter les bornes de recharge B21-B23. La structure porteuse 30 peut également supporter d'autres équipements de la station de recharge S3 comme des lampadaires 32.

La structure porteuse 30 peut aussi comprendre des éléments de rigidification 308 se présentant par exemple chacun sous la forme d'une croix de Saint-André (aussi appelée croix de contreventement). Cela permet notamment d'améliorer la résistance de la structure porteuse 30 lors de son levage pour s'opposer à sa déformation. Ces éléments de rigidification 308 sont notamment répartis selon la longueur de la structure porteuse 30 et fixés chacun sur plusieurs traverses 37 par exemple par soudure et/ou boulonnage.

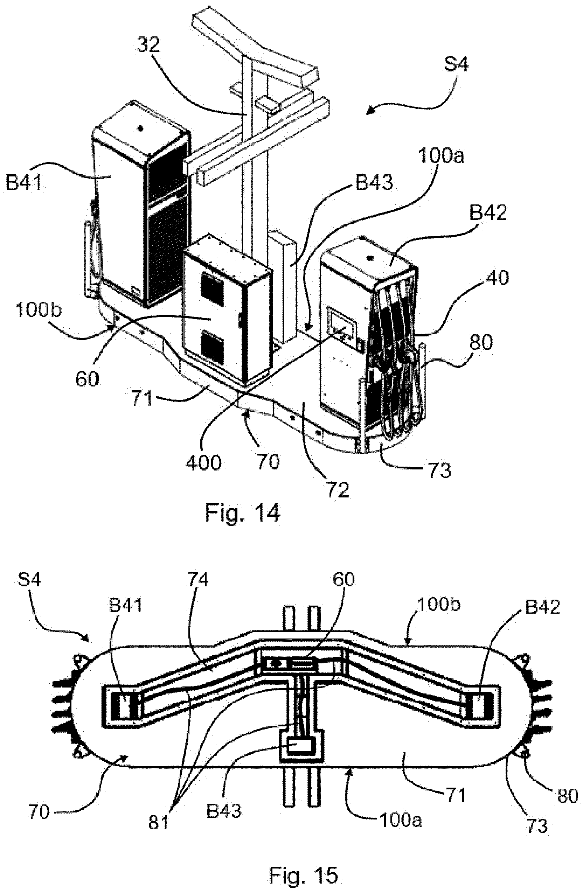

Selon un mode de réalisation, dont une réalisation particulière est illustrée en figures 14 et 15, la structure porteuse 70 comprend un élément monobloc 71 en un matériau composite. En particulier, c'est cet élément monobloc 71 qui supporte les bornes de recharge B41, B42, B43, par exemple au nombre de trois. La structure porteuse 70 peut être constituée par cet élément monobloc 71. Les bornes de recharge B41-B43 peuvent être fixées sur l'élément monobloc 71 qui peut alors servir d'embase pour recevoir les bornes de recharge B41-B43. L'élément monobloc 71 peut aussi supporter la borne de raccordement électrique 60 qui peut être fixée audit élément monobloc 71. Le matériau composite a pour avantage de permettre une résistance mécanique adaptée, en particulier lorsque la station de recharge S4 est soulevée via cet élément monobloc 71.

Le matériau composite est, de préférence, configuré pour résister aux sollicitations mécaniques appliquées à la station de recharge S4 au cours du transport de la station de recharge S4, lui permettant de conserver son intégrité structurelle. A cet effet, le matériau composite peut être du béton armé, i.e. du béton enrobant au moins une armature métallique ou des treillis métalliques.

La composition du matériau composite et les dimensions de l'élément monobloc 71 sont bien entendu adaptées par l'homme du métier, par exemple par calcul de structure, en fonction du poids total de la station de recharge S4 et donc des éléments fixés à l'élément monobloc 71 afin d'éviter la déformation de l'élément monobloc 71 lors du transport de la station de recharge S4 en particulier lorsque ce transport met en oeuvre un levage de la station de recharge S4.

L'élément monobloc 71 peut adopter la forme d'une plaque ou d'une dalle.

Le matériau composite peut présenter une couleur spécifique au moins en surface, ce qui permet une personnalisation de la station de recharge S4, par exemple selon un désir du client souhaitant acquérir la station de recharge S4.

L'élément monobloc 71 peut comprendre une surface supérieure 72 (la surface supérieure étant tournée vers le ciel lorsque la station S4 de recharge est sur son emplacement de recharge) agencée du côté des bornes de recharge B41, B42, B43. Cette surface supérieure 72, délimitée localement par le matériau composite, peut présenter un relief et/ou un état de surface du matériau composite configurés pour conférer une fonction antidérapante à ladite surface supérieure 72. Cela est particulièrement avantageux dans le sens où la surface supérieure 72 va notamment former un sol sur lequel une personne va marcher par exemple pour interagir avec l'une des bornes de recharge B41-B43 à relier à son véhicule électrique. Par exemple, l'aspect de surface peut consister en une rugosité du matériau composite en surface. Par exemple, l'aspect de surface et le relief peuvent être obtenus par le fait que le béton armé soit strié en surface ou par le fait que le béton armé soit du béton armé désactivé ayant permis de faire apparaître des cailloux ou galets en surface, le tout dans le but de former une surface antidérapante au moins au niveau de la face supérieure 72.

La station de recharge S4 peut comprendre des potelets de protection 80, notamment destinés à protéger tout ou partie des bornes de recharge B41-B43 des véhicules manoeuvrant au niveau de la station de recharge S4. Ces potelets de protection 80 peuvent être fixés sur l'élément monobloc 71. En ce sens, chaque potelet de protection 80 (par exemple au nombre de quatre pour la réalisation des figures 14 et 15) peut être fixé sur un bord 73 de l'élément monobloc 71 et s'étendre de sorte à s'élever par rapport à la face supérieure 72 de l'élément monobloc 71. Le positionnement des potelets de protection 80 sera bien entendu adapté à l'emplacement de recharge de sorte à s'interposer entre une place de recharge pour véhicule électrique et la borne de recharge B41-B43 à protéger et associée à cette place de recharge.

D'ailleurs, de tels potelets de protection 80 peuvent être fixés à la structure porteuse quel que soit le mode de réalisation pour assurer la protection des bornes de recharge.

L'élément monobloc 71 peut comprendre une ou plusieurs cavités 74 ou trémies pour le passage de câbles électriques 81, comme le montre par exemple la figure 15 qui illustre la station de recharge S4 de la figure 14 vue de dessous. Par exemple, la station de recharge S4 peut comprendre les câbles électriques 81 reliant les bornes de recharge B41, B42, B43 à la borne de raccordement électrique 60, ces câbles électriques 81 passant par un réseau formé par la ou les cavités 74, notamment de manière invisible lorsque la station de recharge est installée sur son emplacement de recharge.

Un avantage du matériau composite est qu'il est tout particulièrement adapté pour former une structure porteuse dite autoporteuse ou autoportante. Un autre avantage du matériau composite est que l'élément monobloc 71 peut alors être obtenu par moulage pour lui conférer une forme adaptée.

Sur la figure 14, les bornes de recharge B41 et B42 peuvent recharger plusieurs véhicules électriques et la borne de recharge B43 peut recharger un véhicule électrique.

La station de recharge S4 peut comporter un lampadaire 32 fixé sur l'élément monobloc 71.

Selon un mode de réalisation, la structure porteuse 30 comprend des pieds 33 réglables illustrés à titre d'exemple en figures 8, 9, 11, 12, 16 et 17 pour ajuster l'inclinaison de la station de recharge S3 en particulier par rapport à un sol S sur lequel la station de recharge S3 est destinée à être installée. Cela permet par exemple de rattraper la pente du sol S, par exemple pour maintenir le plancher 38 de la station de recharge S3 à l'horizontal dans le cadre de la réalisation de la structure porteuse 30 qui comprend l'ossature.

Les pieds 33 sont destinés à venir en contact avec le sol S, notamment chacun via une portée 331 d'appui au sol dudit pied 33. Les pieds 33 peuvent être montés chacun à une partie de la structure porteuse 30 pour autoriser :
- dans une configuration de réglage dudit pied 33, un ajustement du niveau (aussi appelée hauteur) de la portée d'appui 331 dudit pied 33 rapport à ladite partie de la structure porteuse 30 ;
- dans une configuration de verrouillage dudit pied 33, maintenir la position de la portée d'appui 331 dudit pied 33 par rapport à ladite partie de la structure porteuse 30.

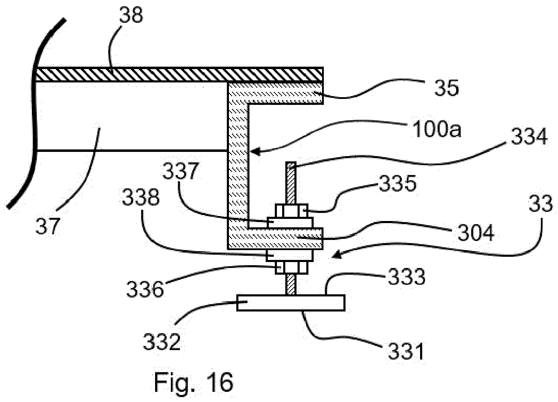

Par exemple, dans le cas du mode de réalisation mettant en oeuvre l'ossature 300, les pieds 33 peuvent comprendre (figure 16) une base 332 comprenant une face inférieure formant la portée d'appui 331 et une face supérieure 333, opposée à la face inférieure, depuis laquelle s'étend une tige filetée 334 dudit pied 33, ladite tige filetée 334 traversant une paroi 304 d'un des premier et deuxième longerons 35, 36 (formant alors ladite partie de la structure porteuse 30 évoquée ci-avant). Chaque pied 33 peut alors comprendre deux écrous 335, 336 vissés sur la tige filetée 334 et configurés pour enserrer, par contact direct ou indirect, la paroi 304 dans la configuration de verrouillage. Par exemple, en figure 16, les deux écrous 335 et 336 enserrent la paroi 304 de manière indirecte par l'intermédiaire, du côté de l'écrou 335, d'une cale 337 biaisée adapté au profil interne de l'aile du longeron correspondant (le premier longeron 35 sur la figure 16) qui est un UPN (le profil interne n'est alors pas plat et nécessite l'utilisation de la cale biaisée) et par l'intermédiaire, du côté de l'écrou 336, d'une rondelle 338. L'ajustement du niveau de la portée d'appui 331 du pied 33 pouvant être réalisée lorsque l'enserrement n'est plus assuré pour permettre un degré de liberté au pied 33 correspondant par rapport à ladite partie de la structure porteuse 30 selon l'axe longitudinal de la tige 334 filetée alors préférentiellement sensiblement orthogonal au plan de l'ossature 300.

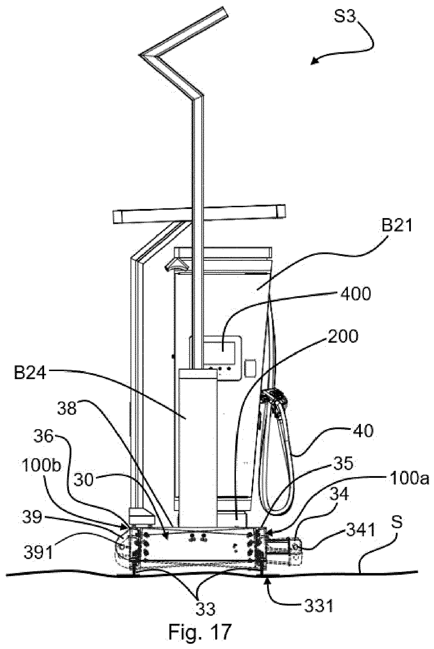

En particulier, les pieds 33 sont prévus en nombre suffisant et à des positions adaptées pour permettre de supporter l'ossature 300 et d'autoriser l'inclinaison de la station de recharge S3 notamment pour en régler l'assiette. A cet effet, la figure 17 montre en pointillés différentes possibilité d'inclinaison de la structure porteuse 30 selon différentes directions d'inclinaison.

En particulier, la structure porteuse 30 peut être telle que :
- les pieds d'une première partie des pieds 33 sont répartis le long de la première face latérale 100a longitudinal de l'ossature 300 formée au moins en partie par le premier longeron 35 (et notamment par deux premiers longerons 35 consécutifs agencés dans le prolongement l'un de l'autre comme en figures 12 et 17) ;
- les pieds 33 d'une deuxième partie des pieds 33 sont répartis le long de la deuxième face latérale 100b longitudinal de l'ossature 300 formée au moins en partie par le deuxième longeron 36 (et notamment par deux deuxièmes longerons 36 consécutifs agencés dans le prolongement l'un de l'autre comme en figures 12 et 17).

Bien entendu, ceci n'est qu'un exemple de réalisation non limitatif d'un système de réglage de l'inclinaison que comprend la station de recharge et dans la cas présent mis en oeuvre via des pieds 33. Toute solution permettant d'assurer la fonction recherchée d'ajustement de l'inclinaison de la station de recharge S3 peut être utilisée comme par exemple des cales.

Bien que ces pieds 33 ne soient pas représentés dans les modes de réalisation des figures 1 à 7 et des figures 14 et 15, ces derniers peuvent y être intégrés d'une manière adaptée à la nature de la structure porteuse correspondante. Dans le cadre de la structure porteuse 70 comprenant l'élément monobloc 71, les pieds ne sont pas nécessaires car une adaptation du sol sur lequel reposera l'élément monobloc 71 peut suffire.

Selon un mode de réalisation, la structure porteuse 30 comprend la première face latérale 100a, la deuxième face latérale 100b opposée à la première face latérale 100a, au moins un premier organe de levage 34, par exemple une oreille de levage, agencé au niveau de la première face latérale 100a et au moins un deuxième organe de levage 39, par exemple une oreille de levage, agencé au niveau de la deuxième face latérale 100b (voir notamment les figures 8, 9, 11, 12 ,17, 18, 19 à titre d'exemple).

Cela permet de prévoir des moyens, i.e. des premier(s) et deuxième(s) organes de levage 34, 39 pour soulever la station de recharge S3 via la structure porteuse 30.

De préférence, plusieurs premiers organes de levage 34 sont répartis le long de la première face latérale 100a et plusieurs deuxièmes organes 39 de levage sont répartis le long du deuxième face latérale 100b. Ainsi, ce qui s'applique par la suite à un premier organe de levage 34 peut s'appliquer à chaque premier organe de levage 34, et ce qui s'applique par la suite à un deuxième organe de levage 39 peut s'appliquer à chaque deuxième organe de levage 39.

Le premier organe de levage 34 est notamment fixé sur la première face latérale 100a et le deuxième organe de levage 39 est notamment fixé sur la deuxième face latérale 100b.

Par exemple, il y a autant de premiers organes de levage 34 que de deuxièmes organes de levage 39 de sorte à former des couples comprenant chacun un premier organe de levage 34 et un deuxième organe de levage 39. Dans ce cas, pour chaque couple, les premier et deuxième organes de levage 34, 39 dudit couple peuvent être agencés de manière décalée le long d'une droite sensiblement orthogonale à la direction d'allongement des première et deuxième faces latérales 100a, 100b. Le but étant de répartir au mieux les contraintes lors du levage de la station de recharge S3 tout en évitant son basculement.

Selon une réalisation, le premier organe de levage 34 comprend une première ouverture de levage 341, le deuxième organe de levage 39 comprend une deuxième ouverture de levage 391, la distance d1 séparant la première face latérale 100a de la première ouverture de levage 341 étant strictement supérieure à la distance d2 séparant la deuxième face latérale 100b de la deuxième ouverture de levage 391. Cela permet de tenir compte d'un centre de gravité de la station de recharge S3 qui ne serait pas situé à équidistance entre les première et deuxième faces latérales 100a, 100b et ainsi permettre un levage tout en évitant le basculement de la station de recharge S3 qui pourrait entraîner sa chute et sa détérioration. Autrement dit, la distance d1 séparant l'ossature 30 de la première ouverture de levage 341 est strictement supérieure à la distance d2 séparant d'ossature 300 de la deuxième ouverture de levage 391.

Une ouverture de levage au sens de la présente description est trou débouchant permettant un arrimage de la station de recharge S3 en vue de la déplacer, chaque ouverture de levage permet la connexion de la station de recharge à tout type de connexion adaptée pour la manutention de la station de recharge comme une manille ou un crochet de levage.

Ainsi, la distance d1 séparant la première face latérale 100a de la première ouverture de levage 341 et la distance d2 séparant la deuxième face latérale 100b de la deuxième ouverture de levage 391 sont notamment des distances mesurées selon une même direction sensiblement orthogonale à la direction d'allongement de la station S3 de recharge (notamment donnée par les première et deuxième faces 100a, 100b latérales) et sensiblement parallèle au plan de la structure porteuse 30 (et donc le cas échéant du plancher 38).

Ces distances d1, d2 seront bien entendu calculées en amont de la fabrication de la station de recharge S3 en prenant en compte notamment au moins le poids et la position de chaque élément (borne de raccordement électrique, borne de recharge, etc.) monté/fixé sur la structure porteuse 30.

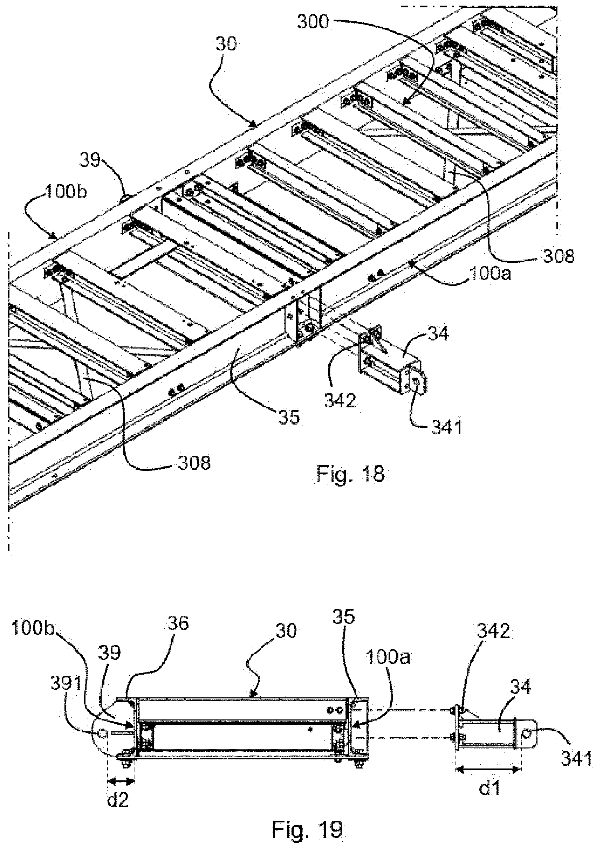

Sur la figure 19, le premier organe de levage est montré séparé de l'ossature, d1 correspondant alors à la distance s'éparant la première ouverture de levage 341 de la face de contact du premier organe de levage 341 avec la première face latérale 100a.

Les distances d1 et d2 sont notamment des distances dites minimales de séparation.

De préférence, le premier organe de levage 34 est amovible, i.e. le premier organe de levage 34 monté/fixé de manière amovible sur la première face latérale 100a (voir notamment les figures 18 et 19 qui représentent une partie de la structure porteuse 30 seule pour des raisons de clarté) ce montage de manière amovible peut être réalisé à l'aide de boulons 342 coopérant avec ledit premier organe de levage 34 et une partie de la structure porteuse 30 comme le premier longeron 35, ou l'un des premiers longerons 35. Ceci permet de rationaliser la fabrication de la station de recharge S3 et d'installer au choix le ou les premiers organes de levage 34 avec notamment le bon déport de leur ouverture 341 de levage vis-à-vis de la première face latérale 100a. Le déport pouvant être plus ou moins important, le ou les premiers organes de levage 34 peuvent être retirés une fois la station de recharge S3 installée sur son emplacement de recharge.

Le ou les deuxièmes organes de levage 39 sont préférentiellement fixés sur la deuxième face latérale 100b, par exemple par soudure au deuxième longeron 36 ou à l'un des deuxième longerons 36 dans le cas de l'ossature 300.

Dans le cas de l'ossature 300, la première face latérale 100a est délimitée au moins par un ou plusieurs premiers longerons 35 et la deuxième face latérale 100b est délimitée au moins par un ou plusieurs deuxièmes longerons 36.

Bien que ces premier(s) et deuxième(s) organes de levage 34, 39 ne soient pas représentés dans les modes de réalisation des figures 1 à 7 et des figures 14 et 15, ces derniers peuvent y être intégrés.

De préférence, tout ou partie des bornes de recharge B1-B4, B11-B15, B21-B25, B41-B43 sont des bornes de recharge pour véhicules automobiles électriques. Par véhicule automobile électrique, il est préférentiellement entendu une voiture comprenant une batterie rechargeable formant source d'énergie pour au moins un moteur électrique de la voiture couplé mécaniquement à des roues de la voiture pour les entraîner en rotation et permettre le déplacement de la voiture.

De préférence, au moins une des bornes de recharge B1-B4, B11-B13, B21-B23, B41-B42 comprend au moins un câble de recharge 40 à connecter à un connecteur de recharge du véhicule électrique à recharger. Au moins une des bornes de recharge B1-B4, B11-B13, B21-B23, B41-B42 comprend des câbles de recharge pour permettre de recharger plusieurs véhicules électriques simultanément.

De préférence, les bornes de recharge B1-B4, B11-B15, B21-B25, B41-B43 fixées sur la structure porteuse le sont chacune par l'intermédiaire d'une base 200 réglable permettant d'ajuster l'inclinaison et/ou la hauteur de ladite borne de recharge B1-B4, B11-B15, B21-B25, B41-B43.

La borne de raccordement électrique 60, aussi appelée boîtier de raccordement ou armoire de raccordement ou borne de raccordement au réseau électrique, est destinée à, c'est-à-dire configurée pour, faire l'interface entre un réseau électrique, par exemple d'un fournisseur d'électricité, et les bornes de recharge B1-B4, B11-B15, B21-B25, B41-B43 de la station de recharge S1, S2, S3, S4. Par exemple, il résulte de ce qui a été évoqué ci-avant que, selon la disponibilité au niveau de l'emplacement de recharge, la borne de raccordement électrique 60 peut comprendre :
- des moyens de connexion à un réseau électrique basse tension tel qu'un réseau de distribution publique ; ou
- des moyens de connexion à poste de ligne haute tension du réseau électrique.
Ainsi, le rôle de la borne de raccordement électrique 60 peut, le cas échéant, être de répartir l'électricité aux bornes de recharge B1-B4, B11-B15, B21-B25, B41-B43. Une telle station de recharge S1, S2, S3, S4 présente donc l'avantage d'être configurée lors de sa fabrication en fonction de sa localisation d'installation et testée lors de sa fabrication.

La présence de la borne de raccordement électrique 60 fixée à la structure porteuse C1, C2, 20, 30, 70 permet donc à cette dernière d'être du type à utiliser après branchement. Dès lors, que la station de recharge S1, S2, S3, S4 est installée à son emplacement de recharge et raccordée au réseau électrique via la borne de raccordement électrique 60, elle est prête à être utilisée nonobstant des ajustements locaux d'embellissement et avoir réalisé les formalités nécessaires auprès du fournisseur d'électricité.

La borne de raccordement électrique 60 peut embarquer un contrôleur de gestion de l'énergie pour répartir l'énergie entre les différentes bornes de recharge en fonction des besoins.

Selon un mode de réalisation, au moins l'une des bornes de recharge B1-B4, B11-B15, B21-B25, B41-B43 est configurée pour fonctionner à une puissance supérieure ou égale à 22 kW et, de préférence, à une puissance comprise entre 22 kW et 2000 kW, et plus particulièrement entre 75 kW et 500 kW. Cela permet de tendre à diminuer le temps de recharge des véhicules électriques compatibles avec une telle borne de recharge B1-B4, B11-B15, B21-B25, B41-B43. Par exemple, plusieurs des bornes de recharge B1-B4, B11-B15, B21-B25, B41-B43 de la station de recharge S1, S2, S3, S4 ou toutes les bornes de recharge B1-B5, B11-B15, B21-B25, B41-B43 de la station de recharge S1, S2, S3, S4 peuvent fonctionner de la manière décrite dans le présent paragraphe.

Selon un mode de réalisation, au moins l'une des bornes de recharge B1-B4, B11-B15, B21-B25, B41-B43 est configurée pour fonctionner une tension supérieure ou égale à 400 V et de préférence à une tension comprise entre 400 V et 1200 V. Cela permet d'adapter la tension de charge à celle requise par les véhicules électriques au cours de leur recharge. Par exemple, plusieurs des bornes de recharge B1-B4, B11-B15, B21-B25, B41-B43 de la station de recharge S1, S2, S3, S4 ou toutes les bornes de recharge B1-B4, B11-B15, B21-B25, B41-B43 de la station de recharge S1, S2, S3, S4 peuvent fonctionner de la manière décrite dans le présent paragraphe.

Le fait que les bornes de recharge B1-B4, B11 -B15, B21-B25, B41-B43 soient fixées sur la structure porteuse C1, C2, 20, 30, 70 permet de fabriquer la station de recharge S1, S2, S3, S4 à la demande. Tout type de bornes de recharge B1-B4, B11-B15, B21-B25, B41-B43, tant en matière de marque, de puissance et/ou de génération technologique peut être intégré à la demande dans la station de recharge S1, S2, S3, S4. La structure porteuse C1, C2, 20, 30, 70 peut alors néanmoins être adaptée pour tenir compte du poids total de la station de recharge S1, S2, S3, S4 correspondante.

Les bornes de recharge B1-B4, B11-B15, B21-B25, B41-B43 pouvant être lourdes, par exemple plus de 800 kg pour chacune de tout ou partie des bornes de recharge, la structure porteuse C1, C2, 20, 30, 70 est adaptée structurellement en matière de résistance mécanique pour permettre le transport de la station de recharge S1, S2, S3, S4.

Les bornes de recharge B1-B4, B11-B15, B21-B25, B41-B43 peuvent être chacune équipée d'un terminal de paiement 400 (figures 2, 4, 8, 9, 11, 12, 14, 17) permettant la vente de l'énergie destinée à recharger un véhicule électrique au consommateur correspondant. Alternativement, un unique terminal de paiement distinct des bornes de recharge peut être fixé à la structure porteuse et être connecté à chacune des bornes de recharge afin de gérer le paiement des recharges des véhicules électriques. Alternativement, la station de recharge peut comprendre autant de bornes de recharge que de terminaux de paiements distincts des bornes de recharge, chaque terminal de paiement étant relié à une seule des bornes de recharge afin de gérer le paiement des recharges des véhicules électriques assurées depuis cette borne de recharge.

L'invention est aussi relative à un procédé d'installation d'une station de recharge S1, S2, S3, S4 de véhicules électriques, le procédé comprenant des étapes consistant à : fabriquer et tester en usine une station de recharge S1, S2, S3, S4 telle que définie précédemment, préparer un emplacement de recharge pour recevoir la station de recharge S1, S2, S3, S4, transporter la station de recharge S1, S2, S3, S4 jusqu'à l'emplacement de recharge, ancrer la station de recharge S1, S2, S3, S4 à l'emplacement de recharge, et relier la borne de raccordement électrique de la station de recharge S1, S2, S3, S4 au réseau électrique.

Le procédé peut comprendre des étapes de raccordement électrique de la station de recharge à la terre, et de test de la qualité du raccordement électrique à la terre.

Le procédé peut comprendre une étape consistant à au moins partiellement enterrer la station de recharge dans le sol à l'emplacement de recharge.

De préférence, l'étape consistant à transporter la station de recharge jusqu'à l'emplacement de recharge est telle que la station de recharge est transportée assemblée. Ainsi, la station de recharge peut être installée plus rapidement sur l'emplacement de recharge. Autrement dit, la station de recharge est transportée en tant que produit fini prêt à être raccordé au réseau électrique via la borne de raccordement électrique 60.

Comme évoqué ci-avant, l'étape de transport peut mettre en oeuvre au moins deux levage de station de recharge S1, S2, S3, S4 par la structure porteuse C1, C2, 20, 30, 70 et un déplacement de la station de recharge S1, S2, S3, S4 par camion sur une remorque du camion. Ceci permettant un transport sûr de la station S1, S2, S3, S4 de recharge.

La notion d'ancrage de la station de recharge peut signifier que la fixité de la station de recharge est assurée. L'ancrage peut alors être réalisé via un dispositif spécifique permettant par exemple d'attacher/fixer la station de recharge au sol ou l'ancrage peut être assuré par le poids de la station de recharge qui est tel que la stabilité de la station de recharge est assurée par son poids. Autrement dit, « ancrer » peut signifier « poser ».

L'ajustement de l'inclinaison de la station de recharge S1, S2, S3, S4 via le réglage des pieds 33 peut être anticipé au cours de l'étape consistant à fabriquer la station de recharge S1, S2, S3, S4 (et notamment avant l'étape consistant à transporter la station de recharge S1, S2, S3, S4), ceci pouvant par exemple être réalisé lorsque le nivellement de l'emplacement de recharge est connu, et/ou être réalisé par réglage des pieds lorsque la station de recharge S1, S2, S3, S4 est ancrée à l'emplacement de recharge ce qui permet un réglage fin sur l'emplacement de recharge.

La station de recharge se présentant sous la forme de l'ensemble transportable présente aussi l'avantage de pouvoir être retirée de l'emplacement de recharge facilement. La station de recharge peut donc être éphémère et installée temporairement pour répondre à un besoin ponctuel comme par exemple subvenir à des besoins en recharges de véhicules électriques lors de départs en vacances ou à proximité du site d'un évènement comme un évènement sportif.

Il apparaitra clairement à l'homme de l'art que la présente invention est susceptible de diverses variantes de réalisation et diverses applications. En particulier, l'invention n'est pas limitée aux modes de réalisations précédemment décrits, mais s'étend à toutes les combinaisons possibles de ces modes de réalisation.

## Revendications

1. Station de recharge (S1, S2, S3, S4) de véhicules électriques, comprenant :
une structure porteuse (C1, C2, 20, 30, 70),
une borne de raccordement électrique (60) pour raccorder la station de recharge à un réseau électrique, fixée à la structure porteuse,
au moins deux bornes de recharge (B1-B4, B11-B15, B21-B25, B41-B43) fixées sur la structure porteuse et électriquement reliées à la borne de raccordement électrique, la station se présentant sous la forme d'un ensemble transportable pour être installée en un emplacement de recharge.

2. Station de recharge selon la revendication 1, comprenant un local (C1, C2, C3) dans lequel est installé un circuit électrique basse tension (15) relié aux bornes de recharge (B1-B4, B11-B15, B21-B25).

3. Station de recharge selon la revendication 2, dans laquelle le local (C1, C2) forme la structure porteuse ou est installé sur la structure porteuse (20).

4. Station de recharge selon l'une des revendications 2 et 3, dans laquelle le local (C1, C2, C3) loge un transformateur haute tension / basse tension (13) comportant un circuit primaire connecté à un circuit haute tension (14) relié à la borne de raccordement électrique et un circuit secondaire connecté au circuit basse tension (15).

5. Station de recharge selon la revendication 4, dans laquelle le local (C1, C2) comprend une première pièce (P2, M2) logeant le transformateur haute tension / basse tension (13) et le circuit haute tension (14), et une seconde pièce (P1, M1, M3) logeant au moins en partie le circuit basse tension (15) et des équipements (16, 17) connectés au circuit basse tension.

6. Station de recharge selon la revendication 2, dans laquelle le local (C1, C2) comprend plusieurs modules (M1, M2, M3) comportant :
au moins un premier module (M1, M3) couplé à au moins une borne de recharge (B11-B15) et logeant le circuit basse tension (15), et
un second module (M2) logeant un transformateur haute tension / basse tension (13) comportant un circuit primaire connecté à un circuit haute tension (14) relié à la borne de raccordement électrique et un circuit secondaire connecté au circuit basse tension (15).

7. Station de recharge selon l'une des revendications 1 à 6, dans laquelle la structure porteuse (20, 30) est configurée pour être au moins partiellement enterrée dans le sol à l'emplacement de recharge.

8. Station de recharge selon l'une des revendications 1 à 7, dans laquelle la structure porteuse (20, 30, 70) est configurée pour loger des câbles de raccordement électrique des bornes de recharge (B1-B4, B11-B15, B21-B25, B41-B43).

9. Station de recharge selon l'une quelconque des revendications 1 à 8, dans laquelle la structure porteuse (C1, C2, 20, 30, 70) est configurée pour supporter le poids de la station de recharge lorsque la station de recharge est déplacée, par exemple par soulèvement.

10. Station de recharge selon l'une quelconque des revendications 1 à 9, dans laquelle la structure porteuse (70) comprend un élément (71) monobloc en un matériau composite tel que par exemple du béton armé.

11. Station de recharge selon l'une quelconque des revendications 1 à 9, dans laquelle la structure porteuse (30) comprend une ossature (300), l'ossature (300) comprenant :
• un premier longeron (35) ;
• un deuxième longeron (36) ;
• des traverses (37) fixées chacune, d'une part, au premier longeron (35) et, d'autre part, au deuxième longeron (36).

12. Station de recharge selon l'une quelconque des revendications 1 à 9, dans laquelle la structure porteuse (C1, C2, 20, 30, 70) comprend des pieds (33) réglables pour ajuster l'inclinaison de la station de recharge (C1, C2, 20, 30, 70).

13. Station de recharge selon l'une quelconque des revendications 1 à 12, dans laquelle la structure porteuse comprend une première face latérale (100a), une deuxième face latérale (100b) opposée à la première face latérale (100a), au moins un premier organe de levage (34) agencé au niveau de la première face latérale (1 00a) et au moins un deuxième organe de levage (39) agencé au niveau de la deuxième face latérale (100b), le premier organe de levage (34) comprenant une première ouverture de levage (341), le deuxième organe de levage (39) comprenant une deuxième ouverture de levage (391), la distance séparant la première face latérale (100a) de la première ouverture (341) de levage étant strictement supérieure à la distance séparant la deuxième face latérale (100b) de la deuxième ouverture (391) de levage.

14. Procédé d'installation d'une station de recharge de véhicules électriques, le procédé comprenant des étapes consistant à :
fabriquer et tester en usine une station de recharge (S1, S2, S3, S4) selon l'une des revendications 1 à 13,
préparer un emplacement de recharge pour recevoir la station de recharge,
transporter la station de recharge jusqu'à l'emplacement de recharge,
ancrer la station de recharge à l'emplacement de recharge, et
relier la borne de raccordement électrique de la station de recharge au réseau électrique.

15. Procédé selon la revendication 14, comprenant des étapes de raccordement électrique de la station de recharge (S1, S2, S3, S4) à la terre, et de test de la qualité du raccordement électrique à la terre.
